# FASCICULE DE BREVET EUROPEEN

(11) **EP 2 274 648 B1**
(45) Date de publication et mention de la délivrance du brevet: **13.02.2013**
(21) Numéro de dépôt: 09745911.9
(22) Date de dépôt: 29.04.2009
(51) Int. Cl.: G02C 7/10

(54) **VERRE POUR LUNETTES ET SON PROCEDE D'OBTENTION**
BRILLENGLAS UND HERSTELLUNGSVERFAHREN DAFÜR
GLASS FOR SPECTACLES AND METHOD FOR MAKING SAME

(30) Priorité: 07.05.2008 FR 0802535
(43) Date de publication de la demande: 19.01.2011
(73) Titulaire: Christian Dalloz Sunoptics, 39206 Saint Claude (FR)
(72) Inventeur: MAISONHAUTE, Laurent, F-39200 Sainte-Claude (FR); BOYER, Nathalie, F-01410 Mijoux (FR)
(74) Mandataire: Gallochat, Alain
(86) Numéro de dépôt international: PCT/FR2009/000506
(87) Numéro de publication internationale: WO 2009/138592

(56) Documents cités:
- EP-A- 1 424 315
- FR-A- 2 003 177
- US-A- 4 045 125

## Description

La présente invention concerne un nouveau type de verre pour lunettes et son procédé d'obtention.

Le domaine technique de la nouvelle invention est celui des verres de lunettes, qu'il s'agisse de lunettes de soleil ou de lunettes ophtalmiques. Le terme « lunettes » doit être compris au sens large et englobe tout dispositif destiné à protéger les yeux d'un utilisateur et / ou à améliorer sa vue.

De façon plus précise, les verres selon la présente invention sont du type présentant un aspect métallique pour l'observateur qui regarde lesdits verres, cet aspect métallique étant plus précisément celui d'un métal précieux tel que l'or. On entend par « aspect métallique » dans la présente description le fait pour lesdits verres de donner à l'observateur l'apparence du métal précieux présent, sous forme de couche, dans lesdits verres.

L'objectif premier de la présente invention n'est pas la protection de l'utilisateur et les lunettes telles que précédemment définies ne sont pas, à la base, destinées à protéger l'utilisateur de rayonnements, tels que les rayons infrarouges, même si, secondairement les lunettes selon la présente invention présentent un certain degré de protection.

Parmi les dispositifs connus dont le but est la protection de l'utilisateur, on peut citer les masques de pompiers dont la visière est recouverte d'une couche d'or, résistant aux hautes températures et protégeant ainsi les pompiers du fort rayonnement présent lors des incendies. Des masques similaires, c'est-à-dire dont la visière est recouverte d'une couche d'or afin de protéger les utilisateurs de rayonnements nocifs, sont également utilisés par les astronautes ou spationautes lors de leurs sorties dans l'espace, ou bien par des pilotes de chasse.

En outre, dans le cas des masques précités, l'épaisseur relativement importante de la couche d'or va conférer au verre sur lequel est déposée cette couche d'or un taux de réflexion élevé du côté du verre dirigé vers l'utilisateur ; ce taux de réflexion n'est pas gênant pour les professionnels précités car leur masque est enveloppant, limitant ainsi considérablement la lumière pouvant se réfléchir sur la face interne du masque, c'est-à-dire la face dirigée vers la personne portant ce masque.

Le problème de la réflexion gênante pour l'utilisateur dans le cas de lunettes a été en partie réglé ainsi qu'il ressort du brevet français 2 003 177 ; dans l'invention décrite dans ce brevet, la couche de métal tel que l'or est prise en sandwich entre deux couches transparentes, un film métallique étant disposé de façon à réduire le taux de réflexion vers l'utilisateur. L'objectif du verre décrit dans ce brevet est en effet de filtrer les rayonnements ayant des longueurs d'ondes dans l'infrarouge et l'ultraviolet nocifs pour l'oeil humain. Toutefois, le rendu de l'aspect métallique du verre selon cette invention où la couche d'or est prise en sandwich entre deux couches transparentes n'est pas satisfaisant, l'aspect métallique de la couche d'or étant susceptible d'être altéré.

Les verres selon la présente invention améliorent très sensiblement l'aspect métallique, tout en diminuant l'épaisseur de la couche de métal précieux tel que l'or, améliorant ainsi la transmission de la lumière, et réduit encore le taux de réflexion vers l'utilisateur.

La structure des verres selon la présente invention permet une utilisation optimale desdits verres, répondant à l'objectif premier qui est celui de donner au verre un aspect métallique pour un observateur et présente un certain nombre d'avantages ainsi que cela apparaîtra dans la description qui va suivre.

De façon plus précise, la structure des verres selon la présente invention est du type comprenant plusieurs couches selon la revendication 1.

Différents métaux précieux sont utilisables selon l'aspect que l'on veut donner aux verres selon l'invention ; parmi ces métaux, on peut citer outre l'or, des métaux tels que l'argent, le platine, le palladium, le titane, le rhodium, le zirconium ou le ruthénium ainsi que les alliages obtenus à partir de ces métaux.

Selon la variante préférentielle de l'invention, l'ensemble constitué par ledit substrat et les différentes couches est pris en sandwich entre deux couches de vernis anti-rayure, ledit vernis anti-rayures étant de préférence à base de polysiloxane durcissable additionné d'au moins un alkoxysiloxane comportant un groupement thiol.

L'épaisseur des différentes couches est absolument déterminante pour obtenir un résultat optimal au niveau des verres selon l'invention et des lunettes réalisées à partir desdits verres.

La présente invention sera mieux comprise à la lecture de la description qui va suivre, référence étant faite aux différentes figures parmi lesquelles :
- la figure 1 est une vue en coupe du verre selon une première variante qui ne fait pas partie de l'invention ;
- la figure 2 est une vue en coupe d'une variante préférentielle de réalisation du verre selon l'invention.

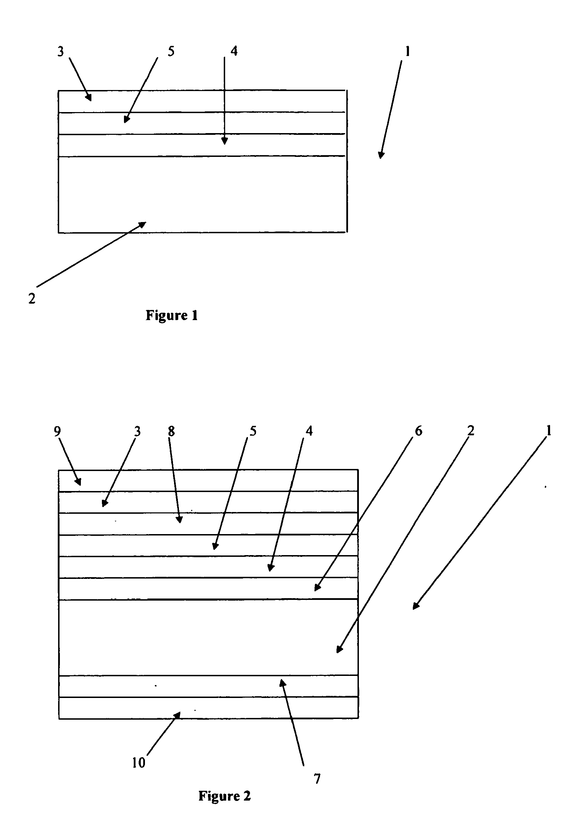

La figure 1 illustre en coupe un verre selon un premier mode de réalisation qui ne fait pas partie de l'invention ; dans cette figure, le verre est globalement référencé (1). Ce verre (1) est constitué d'un substrat transparent (2) ; ce substrat peut être réalisé en un matériau minéral ou organique tel qu'un polycarbonate ou tout autre matériau utilisé dans les verres de lunettes tel que du polyamide ou bien une résine thermoplastique ou thermodurcissable.

Une couche composite sera disposée entre le substrat (2) et la couche de métal précieux, tel que l'or, (3) ; selon la variante d'exécution illustrée dans cette figure 1, la couche composite se compose de deux couches (4) et (5), chacune des deux couches étant antireflet. Cette couche composite, de par sa composition telle qu'elle va être précisée plus avant permet à la fois de renforcer l'aspect métallique malgré la diminution de l'épaisseur de la couche de métal précieux (3), et de diminuer l'effet miroir gênant pour l'utilisateur du verre. Une combinaison pour cette couche composite consiste en une couche (4) appliquée directement sur le substrat (2) et réalisée en un métal tel que le chrome ; cette couche de métal (4) renforce l'aspect métallique recherché, mais ne diminue pas suffisamment l'effet miroir précité, d'où la nécessité d'y adjoindre une couche d'oxyde de silicium (5), qui a elle seule diminue, mais de façon insuffisante, l'effet miroir. De façon surprenante, il a été montré que c'est cette combinaison couche de métal (4) et couche d'oxyde de silicium (5) qui diminue à la fois l'effet miroir précité, réduisant le taux de réflexion vers l'utilisateur, et renforce l'aspect métallique, par exemple l'aspect or, ce qui permet à son tour d'utiliser moins de métal précieux et donc de diminuer l'épaisseur de la couche de ce métal précieux.

D'autres combinaisons sont possibles au niveau des couches (4) et (5) ; ainsi, la couche (4) peut être réalisée en chrome comme cela a été précédemment indiqué, mais peut également être choisie parmi les métaux suivants : nickel, fer, titane, aluminium, zinc, plomb, étain, tantale, tungstène et leurs alliages. De même, l'oxyde de silicium de la couche (5) peut être remplacé par un oxyde de titane, de tantale ou de zirconium.

Avantageusement, pour une épaisseur du substrat (2) de 2 mm, l'épaisseur de la couche (4), par exemple en chrome, sera de 1 à 15 nm, avec une valeur préférentielle de l'ordre de 4 nm, l'épaisseur de la couche (5) par exemple en oxyde de silicium étant de l'ordre de 20 à 70 nm, avec une valeur optimale de l'ordre de 50 nm. Ces différentes valeurs d'épaisseur et ce choix de substances permettent d'avoir une couche de métal précieux dont l'épaisseur est comprise entre 1 et 100 nm, préférentiellement entre 10 et 50 nm, selon le métal précieux utilisé, l'épaisseur optimale étant de l'ordre de 30 nm lorsque le métal précieux est l'or.

On obtient ainsi un verre présentant un aspect métallique, tel que l'or, un effet miroir très limité, tout en préservant un facteur satisfaisant de transmission de la lumière.

La figure 2 illustre une seconde variante d'exécution du verre selon l'invention, variante dans laquelle d'autres couches ont été intégrées audit verre.

Dans cette figure 2, le verre selon l'invention est comme précédemment globalement référencé (1) et comprend un substrat transparent (2), une couche du métal précieux (3) dont l'aspect métallique est recherché, une couche composite composée d'une couche (4) d'un métal tel que le chrome située du côté dudit substrat (2) et d'une couche (5) d'oxyde de silicium située du côté de l'observateur du verre.

Selon ce mode de réalisation, le substrat (2) est pris en sandwich entre deux couches (6), (7) d'un vernis anti-rayures ; ce vernis anti-rayures sera avantageusement à base de polysiloxane durcissable et protègera ledit substrat (2). Cette composition de polysiloxane durcissable aura par exemple été obtenue par hydrolyse et prépolymérisation d'alkoxysilanes organofonctionnels ; elle est plus particulièrement utilisée pour revêtir des articles en matériau organique et pour les protéger contre l'abrasion.

Avantageusement, une couche supplémentaire (8) a été insérée entre la couche (3) de métal précieux et la couche (5) d'oxyde de silicium, une telle couche (8) permettant d'obtenir une meilleure adhérence de la couche de métal précieux (3). Cette couche (8) est un film métallique réalisé en un métal, préférentiellement le chrome, mais qui peut aussi être réalisé en un autre métal tel que le nickel, le fer, le titane, l'aluminium, le zinc, le plomb, l'étain, le tantale, le tungstène, ou bien en un alliage de ces métaux.

Il a par ailleurs été montré que la couche de vernis anti-rayures (6), outre le fait qu'elle protège le substrat (2), permet également une meilleure adhérence de la couche de chrome (4).

Afin de parfaire les qualités du verre selon l'invention, une variante préférentielle d'exécution prévoit que l'ensemble précédemment décrit, à savoir le substrat (2) et les différentes couches (3), (4), (5), (6), (7) et (8) est pris en sandwich entre deux couches (9) et (10) réalisées en un vernis anti-rayures à base de polysiloxane durcissable additionné d'au moins un alkoxysiloxane comportant un groupement thiol., ce qui permet une meilleure adhérence sur l'or lorsque ce dernier est le métal précieux de la couche (3). Ces deux couches (9) et (10) auront une fonction de protection de l'ensemble précité. Toutefois, il sera possible de se dispenser de ces couches (9) et (10) lorsque le métal précieux utilisé sera résistant, ce qui n'est pas le cas de l'or qui peut se rayer facilement.

Les meilleures performances en termes de rendu de l'aspect métallique du verre selon l'invention ont été obtenues avec les épaisseurs de couches suivantes :
- substrat transparent (2) : environ 2 mm ;
- couche de métal précieux (3) : entre 1 et 100 nm, préférentiellement entre 10 et 50 nm ; dans le cas où le métal précieux est l'or, une valeur très préférentielle de l'ordre de 30 nm sera choisie ;
- couche (4) : entre 1 et 15 nm, préférentiellement de l'ordre de 4 nm ;
- couche (5) : entre 20 et 70 nm, préférentiellement de l'ordre de 50 nm ;
- couches de vernis anti-rayures (6) (7) : entre 1 et 10 µm ;
- couche (8) : entre 1 et 5 nm ;
- couches de vernis anti-rayures (9) (10) : entre 1 et 10 µm.

Ces différentes valeurs constituent un bon compromis entre la quantité de métal précieux utilisé, le rendu de l'aspect métallique pour l'observateur dudit verre, et la limitation de l'effet antireflet, assurant ainsi un confort pour l'utilisateur du verre selon l'invention. Une transmission correcte de la lumière à travers ledit verre est également assurée en utilisant ces valeurs.

Les variantes illustrées aux figures 1 et 2 précitées font état d'une couche composite comportant deux couches, en l'occurrence les couches (4) et (5), chacune d'elles étant antireflet, ce qui constitue un nombre minimal de couches constituant la couche composite assurant la fonction antireflet ; il est entendu que selon les caractéristiques souhaitées, et sans pour autant sortir du cadre de la présente invention, cette couche composite pourrait être constituée de plus de deux couches.

La présente invention concerne également les lunettes réalisées à partir du verre selon l'invention, qu'il s'agisse de lunettes ophtalmiques ou solaires, étant entendu que la composition du substrat transparent variera en fonction de l'utilisation choisie.

Un mode préférentiel du procédé d'obtention du verre selon l'invention va maintenant être décrit.

S'agissant du substrat (2), celui-ci est réalisé selon une méthode traditionnelle, à savoir, lorsque ledit substrat est un matériau organique, l'injection dans un moule de ce matériau fondu, éventuellement additionné de pigments.

Les couches de vernis anti-rayures (6), (7), (9) et (10) seront avantageusement appliquées par trempage dans un bain de vernis soit du substrat (2), soit de l'ensemble formé par le substrat (2) et les couches (3), (4), (5), (6), (7) et (8), ledit trempage étant suivi d'un séchage et d'une cuisson en étuve.

Les autres couches, à savoir les couches (3), (4), (5) et (8) sont déposées une par une par évaporation sous vide.

## Revendications

1. Verre de lunettes du type comprenant plusieurs couches, une desdites couches étant un substrat transparent (2), une autre couche (3), située du côté de l'observateur dudit verre, étant en métal précieux , une couche antireflet étant par ailleurs disposée entre ledit substrat transparent (2) et ladite couche de métal précieux (3) et se composant de deux couches antireflet, à savoir une première couche (4) située du côté dudit substrat transparent, réalisée en chrome, et d'une épaisseur de 1 à 15 nm, une deuxième couche (5) située du côté de l'observateur dudit verre, réalisée en oxyde de silicium ayant une épaisseur de 20 à 70 nm, une couche de vernis anti-rayures (6) étant intercalée entre ladite première couche (4) et ledit substrat transparent (2), une autre couche de vernis anti-rayures (7) étant positionnée de l'autre côté dudit substrat transparent (2), ce dernier étant ainsi pris en sandwich entre lesdites deux couches de vernis anti-rayures (6, 7), dans lequel ledit vernis anti-rayures est à base de polysiloxane durcissable.

2. Verre selon la revendication 1 **caractérisé en ce que** ledit vernis anti-rayures a une épaisseur comprise entre 1 et 10 µm.

3. Verre selon l'une des revendications 1 ou 2 **caractérisé en ce qu'**un film métallique (8) est disposé entre la couche de métal précieux (3) et ladite deuxième couche (5).

4. Verre selon la revendication 3 **caractérisé en ce que** ledit film métallique (8) est choisi parmi les matériaux suivants : chrome, nickel, fer, titane, aluminium, zinc, plomb, étain, tantale, tungstène et leurs alliages.

5. Verre selon la revendication 4 **caractérisé en ce que** ledit film métallique (8) a une épaisseur comprise entre 1 et 5 nm.

6. Verre selon l'une quelconque des revendications 1 à 5 **caractérisé en ce que** l'épaisseur de la couche de métal précieux (3) est comprise entre 1 et 100 nm.

7. Verre selon la revendication 6 **caractérisé en ce que** l'épaisseur de la couche de métal précieux (3) est de 10 à 50 nm.

8. Verre selon l'une quelconque des revendications 1 à 7 **caractérisé en ce que** l'ensemble constitué par ledit substrat transparent (2) et les différentes couches consistant en la couche de métal précieux (3), lesdites première et deuxième couches (4, 5), les couches de vernis anti-rayures (6, 7) et ledit film métallique (8) est pris en sandwich entre deux couches de vernis anti-rayures (9, 10).

9. Verre selon la revendication 8 **caractérisé en ce que** ledit vernis anti-rayures prenant en sandwich ledit ensemble est à base de polysiloxane durcissable additionné d'au moins un alkoxysiloxane comportant un groupement thiol.

10. Verre selon la revendication 9 **caractérisé en ce que** ledit vernis anti-rayures a une épaisseur comprise entre 1 et 10 µm.

11. Verre selon l'une quelconque des revendications 1 à 10 **caractérisé en ce que** la couche de métal précieux (3) est de l'or.

12. Verre selon la revendication 11 **caractérisé en ce que** la couche d'or est de 30nm.

13. Verre selon l'une quelconque des revendications 1 à 12 **caractérisé en ce que** ladite première couche (4) a une épaisseur de 4 nm, ladite deuxième couche (5) ayant une épaisseur de 50 nm.

14. Procédé d'obtention du verre selon l'une quelconque des revendications 1 à 13 **caractérisé en ce qu'**il consiste à appliquer lesdites couches de vernis par trempage dans un bain de vernis suivi d'un séchage et d'une cuisson en étuve, les autres couches étant déposées une par une par évaporation sous vide.

15. Lunettes réalisées avec des verres selon l'une quelconque des revendications 1 à 14.

## Claims

1. A spectacle glass of the type comprising several layers, one of said layers being a transparent substrate (2), another layer (3), located on the side of the observer of said glass, being in precious metal, an antireflective layer being moreover positioned between said transparent substrate (2) and said precious metal layer (3), and consisting of two antireflective layers, i.e. a first layer (4) located on the side of said transparent substrate, made in chromium, and with a thickness from 1 to 15 nm, a second layer (5) located on the side of the observer of said glass, made in silicon oxide with a thickness from 20 to 70 nm, a scratch-resistant varnish layer (6) being inserted between said first layer (4) and said transparent substrate (2), another scratch-resistant varnish layer (7) being positioned on the other side of said transparent substrate (2), the latter being thus sandwiched between said two scratch-resistant varnish layers (6, 7), wherein said scratch-resistant varnish layer is based on curable polysiloxane.

2. The glass according to claim 1, **characterized in that** said scratch-resistant varnish has a thickness comprised between 1 and 10 µm.

3. The glass according to one of claims 1 or 2, **characterized in that** a metal film (8) is placed between the precious metal layer (3) and said second layer (5).

4. The glass according to claim 3, **characterized in that** said metal film (8) is selected from the following materials: chromium, nickel, iron, titanium, aluminium, zinc, lead, tin, tantalum, tungsten and alloys thereof.

5. The glass according to claim 4, **characterized in that** said metal film (8) has a thickness comprised between 1 and 5 nm.

6. The glass according to any of claims 1 to 5, **characterized in that** the thickness of the precious metal layer (3) is comprised between 1 and 100 nm.

7. The glass according to claim 6, **characterized in that** the thickness of the precious metal layer (3) is from 10 to 50 nm.

8. The glass according to any of claims 1 to 7, **characterized in that** the assembly formed by said transparent substrate (2) and the different layers consisting in the precious metal layer (3), said first and second layers (4, 5), the scratch-resistant varnish layers (6, 7) and said metal film (8) is sandwiched between two scratch-resistant varnish layers (9, 10).

9. The glass according to claim 8, **characterized in that** said scratch-resistant varnish sandwiching said assembly is based on curable polysiloxane added with at least one alkoxysiloxane including a thiol group.

10. The glass according to claim 9, **characterized in that** said scratch-resistant varnish has a thickness comprised between 1 and 10 µm.

11. The glass according to any of claims 1 to 10, **characterized in that** the precious metal layer (3) is gold.

12. The glass according to claim 11, **characterized in that** the gold layer is a 30 nm layer.

13. The glass according to any of claims 1 to 12, **characterized in that** said first layer (4) has a thickness of 4 nm, said second layer (5) having a thickness of 50 nm.

14. A method for obtaining the glass according to any of claims 1 to 13, **characterized in that** it consists of applying said varnish layers by soaking in a varnish bath, followed by drying and baking in an oven, the other layers being deposited one by one by evaporation *in vacuo.*

15. Spectacles made with glasses according to any of claims 1 to 14.

## Patentansprüche

1. Brillenglas des Typs, der mehrere Schichten umfasst, wobei eine der Schichten ein transparentes Substrat (2) ist, eine andere Schicht (3), die sich auf der Seite des Beobachters des Glases befindet, aus Edelmetall ist, wobei ferner eine Antireflexschicht zwischen dem transparenten Substrat (2) und der Edelmetallschicht (3) zwischengestellt ist und aus zwei Antireflexschichten besteht, nämlich einer ersten Schicht (4), die sich auf der Seite des transparenten Substrats befindet, aus Chrom hergestellt ist und eine Dicke von 1 bis 15 nm hat, und einer zweiten Schicht (5), die sich auf der Seite des Beobachters des Glases befindet, aus Siliziumoxid hergestellt ist und eine Dicke von 20 bis 70 nm hat, wobei eine Anti-Kratzer-Lackschicht (6) zwischen der ersten Schicht (4) und dem transparenten Substrat (2) zwischengestellt ist, wobei eine andere Anti-Kratzer-Lackschicht (7) auf der anderen Seite des transparenten Substrats (2) angeordnet ist, wobei dieses Letztgenannte sandwichartig zwischen den zwei Anti-Kratzer-Lackschichten (6, 7) angeordnet ist, wobei der Anti-Kratzer-Lack auf der Basis von härtbarem Polysiloxan ist.

2. Glas nach Anspruch 1, **dadurch gekennzeichnet, dass** der Anti-Kratzer-Lack eine Dicke zwischen 1 und 10 µm inklusive hat.

3. Glas nach einem der Ansprüche 1 oder 2, **dadurch gekennzeichnet, dass** zwischen der Edelmetallschicht (3) und der zweiten Schicht (5) ein Metallfilm (8) angeordnet ist.

4. Glas nach Anspruch 3, **dadurch gekennzeichnet, dass** der Metallfilm (8) aus den folgenden Materialien ausgewählt ist: Chrom, Nickel, Eisen, Titan, Aluminium, Zink, Blei, Zinn, Tantal, Wolfram und ihren Legierungen.

5. Glas nach Anspruch 4, **dadurch gekennzeichnet, dass** der Metallfilm (8) eine Dicke zwischen 1 und 5 nm inklusive hat.

6. Glas nach einem der Ansprüche 1 bis 5, **dadurch gekennzeichnet, dass** die Dicke der Edelmetallschicht (3) zwischen 1 und 100 nm inklusive ist.

7. Glas nach einem Anspruch 6, **dadurch gekennzeichnet, dass** die Dicke der Edelmetallschicht (3) 10 bis 50 nm ist.

8. Glas nach einem der Ansprüche 1 bis 7, **dadurch gekennzeichnet, dass** die Gruppe, die von dem transparenten Substrat (2) und den verschiedenen Schichten gebildet wird, die aus der Edelmetallschicht (3), der ersten und zweiten Schicht (4, 5), den Anti-Kratzer-Lackschichten (6, 7) und dem Metallfilm (8) bestehen, sandwichartig zwischen zwei Anti-Kratzer-Lackschichten (9, 10) angeordnet ist.

9. Glas nach Anspruch 8, **dadurch gekennzeichnet, dass** der Anti-Kratzer-Lack, der die Gruppe sandwichartig umschließt, auf der Basis von härtbarem Polysiloxan ist, dem mindestens ein Alkoxysiloxan hinzugefügt ist, das eine Thiol-Gruppe aufweist.

10. Glas nach Anspruch 9, **dadurch gekennzeichnet, dass** der Anti-Kratzer-Lack eine Dicke zwischen 1 und 10 µm inklusive hat.

11. Glas nach einem der Ansprüche 1 bis 10, **dadurch gekennzeichnet, dass** die Edelmetallschicht (3) aus Gold ist.

12. Glas nach Anspruch 11, **dadurch gekennzeichnet, dass** die Goldschicht 30 nm ist.

13. Glas nach einem der Ansprüche 1 bis 12, **dadurch gekennzeichnet, dass** die erste Schicht (4) eine Dicke von 4 nm hat, wobei die zweite Schicht (5) eine Dicke von 50 nm hat.

14. Herstellungsverfahren des Glases nach einem der Ansprüche 1 bis 13, **dadurch gekennzeichnet, dass** es darin besteht, die Lackschichten durch Eintauchen in ein Lackbad aufzubringen, gefolgt von einer Trocknung und einer Härtung in einem Ofen, wobei die anderen Schichten einzeln durch Vakuumverdampfung aufgebracht werden.

15. Brille, die mit Gläsern nach einem der Ansprüche 1 bis 14 angefertigt ist.
